# EUROPEAN PATENT APPLICATION

(11) **EP 4 738 953 A1**
(43) Date of publication of application: **06.05.2026**
(21) Application number: 23942820.4
(22) Date of filing: 28.06.2023
(51) Int. Cl.: H04W 72/0446

(54) **INFORMATION INDICATION METHOD, AND TERMINAL, NETWORK DEVICE, COMMUNICATION SYSTEM AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Gunzelmann, Rainer
(86) International application number: PCT/CN2023/103491
(87) International publication number: WO 2025/000303

(57) **Abstract**

Provided in the embodiments of the present disclosure are an information indication method, and a terminal, a network device, a communication system and a storage medium. The method, which is executed by a terminal, comprises: receiving first information, wherein the first information is used for indicating at least one of the following: the categories of time units comprised in a plurality of physical uplink shared channel (PUSCH) actual repetitions for executing PUSCH repetition type B transmission; and the category of a time unit comprised in any PUSCH actual repetition among a plurality of PUSCH actual repetitions. Thus, the usage of different categories of time units is clearer.

## Description

### TECHNICAL FIELD

The disclosure relates to the field of communication technology, specifically to a method and apparatus for indicating information, a communication device, a communication system, and a storage medium.

### BACKGROUND

In the field of communication technologies, research on subband full duplex (SBFD) has been carried out to improve uplink coverage and throughput. In the SBFD scenario, downlink (DL) symbols, SBFD symbols, uplink (UL) symbols and flexible (F) symbols are present.

### SUMMARY

The introduction of different types of time units lead to the unclear usage of those different type of time units.

Embodiments of the disclosure provide a method for indicating information, a terminal, a network device, a communication system, and a storage medium.

According to a first aspect of the embodiments of the disclosure, a method for indicating information is provided, and the method includes:
receiving first information;
in which the first information indicates at least one of:
one or more time unit categories corresponding to a plurality of actual physical uplink shared channel (PUSCH) repetitions in a PUSCH repetition type B transmission; or
a time unit category corresponding to any one of the plurality of actual PUSCH repetitions.

According to a second aspect of the embodiments of the disclosure, a method for indicating information is provided, and the method includes:
sending first information;
in which the first information indicates at least one of:
   one or more time unit categories corresponding to a plurality of actual PUSCH repetitions in a PUSCH repetition type B transmission; or
   a time unit category corresponding to any one of the plurality of actual PUSCH repetitions.

According to a third aspect of the embodiments of the disclosure, a terminal is provided, which includes:
a transceiving module configured to receive first information;
in which the first information indicates at least one of:
one or more time unit categories corresponding to a plurality of actual PUSCH repetitions in PUSCH repetition type B transmission; or
a time unit category corresponding to any one of the plurality of actual PUSCH repetitions.

According to a fourth aspect of the embodiments of the disclosure, a network device is provided, which includes:
a transceiving module configured to send first information;
in which the first information indicates at least one of:
   one or more time unit categories corresponding to a plurality of actual PUSCH repetitions in PUSCH repetition type B transmission; or
   a time unit category corresponding to any one of the plurality of actual PUSCH repetitions.

According to a fifth aspect of the embodiments of the disclosure, a method for indicating information is provided. The method includes:
a network device sending first information to a terminal;
in which the first information indicates at least one of:
   one or more time unit categories corresponding to a plurality of actual PUSCH repetitions in PUSCH repetition type B transmission; or
   a time unit category corresponding to any one of the plurality of actual PUSCH repetitions.

According to a sixth aspect of the embodiments of the disclosure, a communication system is provided, which includes a terminal and a network device, in which the terminal is configured to implement the method for indicating information in the first aspect, and the network device is configured to implement the method for indicating information in the second aspect.

According to a seventh aspect of the embodiments of the disclosure, a terminal is provided, which includes:
one or more processors;
in which the terminal is configured to execute the method for indicating information in the first aspect.

According to an eighth aspect of the embodiments of the disclosure, a network device is provided, which includes:
one or more processors;
in which the network device is configured to execute the method for indicating information in the second aspect.

According to a ninth aspect of the embodiments of the disclosure, a storage medium is provided, which stores instructions which, when run on a communication device, cause the communication device to execute the method for indicating information in the first aspect, the second aspect or the fifth aspect.

The technical solutions provided by the embodiments of the disclosure clarify the usage of different types of time units.

It should be understood that the above general description and the following detailed description are merely exemplary and explanatory, and shall not limit the embodiments of the disclosure.

### BRIEF DESCRIPTION OF THE DRAWINGS

The accompanying drawings herein are incorporated into and constitute a part of this specification, illustrate embodiments consistent with the present invention, and together with the specification serve to explain the principles of the embodiments of the present invention.
FIG. 1a is a schematic diagram of a communication system according to an embodiment.
FIG. 1b is a schematic diagram of a time unit according to an embodiment.
FIG. 1c is a schematic diagram of a nominal repetition and an actual repetition according to an embodiment.
FIG. 2a is a schematic flowchart of a method for indicating information according to an embodiment.
FIG. 2b is a schematic diagram of a nominal repetition and an actual repetition according to an embodiment.
FIG. 3a is a schematic flowchart of a method for indicating information according to an embodiment.
FIG. 3b is a schematic flowchart of a method for indicating information according to an embodiment.
FIG. 4a is a schematic flowchart of a method for indicating information according to an embodiment.
FIG. 4b is a schematic flowchart of a method for indicating information according to an embodiment.
FIG. 5a is a schematic flowchart of a method for indicating information according to an embodiment.
FIG. 6a is a schematic flowchart of a method for indicating information according to an embodiment.
FIG. 7a is a schematic diagram of a first information indication apparatus according to an embodiment.
FIG. 7b is a schematic diagram of a second information indication apparatus according to an embodiment.
FIG. 8a is a schematic diagram of a user equipment (UE) according to an embodiment.
FIG. 8b is a schematic diagram of a communication device according to an embodiment.

### DETAILED DESCRIPTION

Embodiments of the disclosure provide a method for indicating information, an apparatus, a communication device, a communication system, and a storage medium.

According to a first aspect of the embodiments of the disclosure, a method for indicating information is provided, and the method includes:
receiving first information;
in which the first information indicates at least one of:
   one or more time unit categories corresponding to a plurality of actual physical uplink shared channel (PUSCH) repetitions in a PUSCH repetition type B transmission; or
   a time unit category corresponding to any one of the plurality of actual PUSCH repetitions. The time unit category includes at least one of: a first time unit category, or a second time unit category.

In the foregoing embodiments, since the first information explicitly indicates at least one of one or more time unit categories corresponding to the plurality of actual PUSCH repetitions in the PUSCH repetition type B transmission or the time unit category corresponding to any one of the plurality of actual PUSCH repetitions, it is possible to clearly determine the one or more time unit categories corresponding to the plurality of actual PUSCH repetitions and/or the time unit category corresponding to any one of the plurality of actual PUSCH repetitions. Compared with a scenario where the time unit category is uncertain, this improves a reliability of performing the PUSCH repetition Type B transmission.

In combination with some embodiments in the first aspect, in some embodiments, the time unit category includes at least one of: a first time unit category, or a second time unit category, in which the first time unit category corresponds to a subband full duplex (SBFD) symbol, and the second time unit category corresponds to a non-SBFD symbol.

In the above embodiment, the first information explicitly indicates the one or more time unit categories corresponding to the plurality of actual PUSCH repetitions and/or the time unit category corresponding to any one of the plurality of actual PUSCH repetitions.

In combination with some embodiments in the first aspect, in some embodiments, the first information indicates that:
both an SBFD symbol and a non-SBFD symbol are available for performing the plurality of actual PUSCH repetitions, and either the SBFD symbol or the non-SBFD symbol is available for performing any one of the plurality of actual PUSCH repetitions.

In the above embodiment, it is explicitly indicated that both the SBFD symbol and the non-SBFD symbol are available for performing the plurality of actual PUSCH repetitions, and either the SBFD symbol or the non-SBFD symbol is available for performing any one of the plurality of actual PUSCH repetitions. Thus, the usable symbols may be clearly determined when performing actual PUSCH repetitions, thereby making the actual PUSCH repetitions more reliable.

In combination with some embodiments in the first aspect, in some embodiments, receiving the first information includes:
receiving a first message,
in which the first message includes the first information, and the first message is one of:
   a downlink control information (DCI) message;
   a radio resource control (RRC) message;
   a medium access control (MAC) control element (CE) message; and
   a system information block (SIB).

In the above embodiments, the first information may be received by reusing messages in a communication process, thereby reducing signaling overhead, decreasing resource consumption, and improving resource utilization efficiency.

In combination with some embodiments in the first aspect, in some embodiments, the method further includes:
receiving second information,
in which the second information is configured to instruct a terminal to perform the PUSCH repetition type B transmission.

In the above embodiments, the terminal may be triggered to perform the PUSCH repetition Type B transmission via the received second information.

In combination with some embodiments in the first aspect, in some embodiments, receiving the second information includes:
receiving a second message,
in which the second message includes the second information, and the second message is one of:
   a DCI message; and
   a RRC message.

In the above embodiments, the second information may be received by reusing messages in the communication process, thereby reducing signaling overhead, decreasing resource consumption, and improving resource utilization efficiency.

In combination with some embodiments in the first aspect, in some embodiments, the method further includes:
determining, based on the first information, time units corresponding to the plurality of actual PUSCH repetitions respectively in the PUSCH repetition type B transmission.

In the above embodiments, the time units corresponding to the plurality of actual PUSCH repetitions respectively in the PUSCH repetition type B transmission may be clearly determined based on the one or more time unit categories indicated by the first information, thereby making the actual PUSCH repetitions more reliable.

In combination with some embodiments in the first aspect, in some embodiments, a number of potential valid time units corresponding to a nominal PUSCH repetition in the PUSCH repetition type B transmission is greater than 0, and the nominal PUSCH repetition includes at least one actual PUSCH repetition.

In the above embodiments, at least one actual PUSCH repetition may be determined based on the number of potential valid time units corresponding to the nominal PUSCH repetition.

In combination with some embodiments in the first aspect, in some embodiments, a time unit is a symbol, a nominal PUSCH repetition corresponds to a plurality of potential valid symbols within one time slot, and all consecutive SBFD symbols among the plurality of potential valid symbols form one actual PUSCH repetition, and/or all consecutive non-SBFD symbols among the plurality of potential valid symbols form one actual PUSCH repetition.

In the above embodiments, different actual PUSCH repetitions corresponding to different symbol categories may be clearly determined from the nominal PUSCH repetition.

In combination with some embodiments in the first aspect, in some embodiments, the non-SBFD symbol is a symbol not containing a downlink (DL) subband and an uplink (UL) subband simultaneously in a frequency domain.

In the above embodiments, the definitions of the SBFD symbol and the non-SBFD symbols are clarified, thereby enabling more explicit use of the SBFD symbol and the non-SBFD symbol.

In combination with some embodiments in the first aspect, in some embodiments, the SBFD symbol includes a guard band (GB) in the frequency domain.

In the above embodiments, through frequency-domain isolation, an interference between the DL signal in the DL subband and the UL signal in the UL subband is reduced.

In combination with some embodiments in the first aspect, in some embodiments, the method further includes: receiving third information; in which the third information is configured to instruct a terminal to receive data in a plurality of time units.

In the above embodiments, after receiving the third information configured to instruct the terminal to receive data in the plurality of time units, the terminal may receive data in the plurality of time units based on the third information.

According to a second aspect of the embodiments of the disclosure, a method for indicating information is provided, and the method includes:
sending first information;
in which the first information indicates at least one of:
   one or more time unit categories corresponding to a plurality of actual PUSCH repetitions in a PUSCH repetition type B transmission; or
   a time unit category corresponding to any one of the plurality of actual PUSCH repetitions.

In combination with some embodiments in the second aspect, in some embodiments, the time unit category includes at least one of: a first time unit category, or a second time unit category, in which the first time unit category corresponds to an SBFD symbol, and the second time unit category corresponds to a non-SBFD symbol.

In combination with some embodiments in the second aspect, in some embodiments, the first information indicates that:

both an SBFD symbol and a non-SBFD symbol are available for performing the plurality of actual PUSCH repetitions, and either the SBFD symbol or the non-SBFD symbol is available for performing any one of the plurality of actual PUSCH repetitions.

In combination with some embodiments in the second aspect, in some embodiments, sending the first information includes:
sending a first message,
in which the first message includes the first information, and the first message is one of:
   a DCI message;
   a RRC message;
   a MAC CE message; and
   an SIB.

In combination with some embodiments in the second aspect, in some embodiments, the method further includes:
sending second information,
in which the second information is configured to instruct a terminal to perform the PUSCH repetition type B transmission.

In combination with some embodiments in the second aspect, in some embodiments, sending the second information includes:
sending a second message,
**in** which the second message includes the second information, and the second message is one of:
   a DCI message; and
   a RRC message.

In combination with some embodiments in the second aspect, in some embodiments, a number of potential valid time units corresponding to a nominal PUSCH repetition in the PUSCH repetition type B transmission is greater than 0, and the nominal PUSCH repetition includes at least one actual PUSCH repetition.

In combination with some embodiments in the second aspect, in some embodiments, a time unit is a symbol, a nominal PUSCH repetition corresponds to a plurality of potential valid symbols within one time slot, and all consecutive SBFD symbols among the plurality of potential valid symbols form one actual PUSCH repetition, and/or all consecutive non-SBFD symbols among the plurality of potential valid symbols form one actual PUSCH repetition.

In combination with some embodiments in the second aspect, in some embodiments, the non-SBFD symbol is a symbol not containing a DL subband and an UL subband simultaneously in a frequency domain.

In combination with some embodiments in the second aspect, in some embodiments, the SBFD symbol includes a GB in the frequency domain.

In combination with some embodiments in the second aspect, in some embodiments, the method further includes:
sending third information;
in which the third information is configured to instruct a terminal to receive data in a plurality of time units.

According to a third aspect of the embodiments of the disclosure, a terminal is provided, and the terminal includes:
a transceiving module configured to receive first information;
in which the first information indicates at least one of:
   one or more time unit categories corresponding to a plurality of actual PUSCH repetitions in PUSCH repetition type B transmission; or
   a time unit category corresponding to any one of the plurality of actual PUSCH repetitions.

According to a fourth aspect of the embodiments of the disclosure, a network device is provided, and the network device includes:
a transceiving module configured to send first information;
in which the first information indicates at least one of:
   one or more time unit categories corresponding to a plurality of actual PUSCH repetitions in PUSCH repetition type B transmission; or
   a time unit category corresponding to any one of the plurality of actual PUSCH repetitions.

According to a fifth aspect of the embodiments of the disclosure, a method for indicating information is provided, and the method includes:
a network device sending first information to a terminal;
in which the first information indicates at least one of:
   one or more time unit categories corresponding to a plurality of actual PUSCH repetitions in PUSCH repetition type B transmission; or
   a time unit category corresponding to any one of the plurality of actual PUSCH repetitions.

According to a sixth aspect of the embodiments of the disclosure, a system for indicating information is provided, and the system include a terminal and a network device, in which the terminal is configured to implement the method for indicating information according to the first aspect, and the network device is configured to implement the method for indicating information according to the second aspect.

According to a seventh aspect of the embodiments of the disclosure, a terminal is provide, and the terminal includes:
one or more processors;
in which the terminal is configured to execute the method for indicating information according to the first aspect.

According to an eighth aspect of the embodiments of the disclosure, a network device is provide, and the network device includes:
one or more processors;
in which the network device is configured to execute the method for indicating information according to the second aspect.

According to a ninth aspect of the embodiments of the disclosure, a storage medium is provide, and the storage medium stores instructions. When the instructions run on a communication device, the communication device is caused to perform the method for indicating information described in the optional implementations of the first aspect and the second aspect.

According to a tenth aspect of the embodiments of the disclosure, a program product is provide. When the program product is executed by a communication device, the communication device is caused to perform the method described in the optional implementations of the first aspect and the second aspect.

According to an eleventh aspect of the embodiments of the disclosure, a computer program is provide. When the computer program runs on a computer, the computer is caused to perform the method described in the optional implementations of the first aspect and the second aspect.

According to a twelfth aspect of the embodiments of the disclosure, a chip or chip system is provide. The chip or chip system includes a processing circuit configured to perform the method described in the optional implementations of the first aspect and the second aspect.

**It** may be understood that the aforementioned terminal, network device, communication system, storage medium, program product, computer program, chip or chip system are all configured to perform the methods proposed by the embodiments of the disclosure. Therefore, the beneficial effects they can achieve may refer to the beneficial effects in the corresponding methods, which are not repeated here.

The embodiments of the disclosure provide a method for indicating information, a terminal, a network device, a communication system, and a storage medium. In some embodiments, the term "method for indicating information" may be used interchangeably with terms such as "information processing method" and "information transmission method". The term "communication system" may be used interchangeably with terms such as "information processing system".

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, optional implementations in a certain embodiment may be combined arbitrarily; furthermore, the embodiments may be combined arbitrarily. For example, some or all steps of different embodiments may be combined arbitrarily, and a certain embodiment may be combined arbitrarily with optional implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of' refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

In some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "comprising A", "used to indicate A", and "carrying A" may be interpreted as directly carrying A or indirectly indicating A.

**In** some embodiments, terms such as "...", "determine...", "in the case of...", "when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, an apparatus or the like may be interpreted as physical or virtual, and its name is not limited to the name recorded in the embodiments; terms such as "apparatus", "equipment", "device", "circuit", "network element", "node", "function", "unit", "section", "system", "network", "chip", "chip system", "entity", and "subject" may be used interchangeably.

**In** some embodiments, the term "network" may be interpreted as an apparatus included in a network (e.g., an access network device, a core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

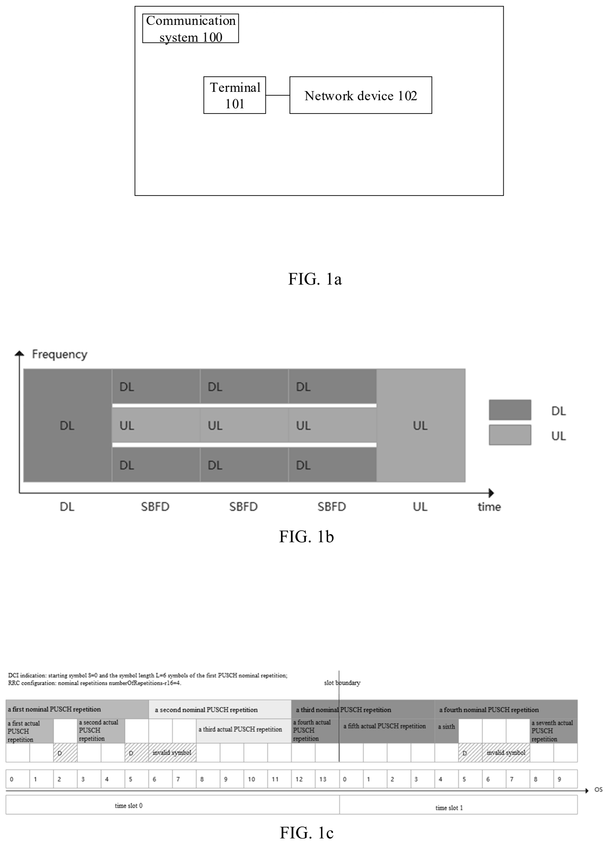

FIG. 1a is a schematic diagram of a communication system according to an embodiment of the disclosure.

As shown in FIG. 1a, the communication system 100 includes a terminal 101 and a network device 102.

In some embodiments, the network device 102 may include at least one of an access network device or a core network device.

In some embodiments, the terminal 101 includes, for example, at least one of a mobile phone, a wearable device, an Internet of Things (IoT) device, a vehicle with communication functions, an intelligent vehicle, a tablet computer (Pad), a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device is, for example, a node or device that accesses terminals to a wireless network. The access network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a Wi-Fi system, but is not limited thereto.

In some embodiments, the technical solutions of the disclosure may be applicable to an open RAN architecture. In this case, the interfaces between access network devices or within an access network device involved in the embodiments of the disclosure may become internal interfaces of the open RAN, and the processes and information interaction between these internal interfaces may be implemented through software or programs.

In some embodiments, the access network device may be composed of a central unit (CU) and a distributed unit (DU). The CU may also be referred to as a control unit. The CU-DU structure may split the protocol layers of the access network device, with functions of some protocol layers centrally controlled by the CU, and functions of the remaining part or all of the protocol layers distributed in the DU, where the CU centrally controls the DU, but is not limited thereto.

In some embodiments, the core network device may be a single device including one or more network elements, or may be a plurality of devices or device groups respectively including all or part of the aforementioned one or more network elements. The network elements may be virtual or physical. A core network includes, for example, at least one of an evolved packet core (EPC), a 5G core network (5GCN), or a next generation core (NGC).

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1a, or some subjects in the communication system 100, but are not limited thereto. Each subject shown in FIG. 1a is an example. The communication system may include all or part of the subjects in FIG. 1, or may include other subjects not shown in FIG. 1. The number and form of each subject are arbitrary. The connection relationship between each subject is an example. Each subject may be unconnected or connected, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

To improve UL coverage and throughput, in duplex enhancement, research has been conducted on SBFD.

In some embodiments, a carrier component (CC) is divided into a plurality of subbands (SBs) in a frequency domain on downlink (DL) or flexible (F) symbols. The plurality of SBs include one UL subband and at least one (one or two) DL subbands, and the base station may transmit a DL signal on the DL subband while receiving an UL signal on the UL subband. DL or F symbols may be configured in at least one of the following manners:
time division duplex (TDD)-UL-DL-ConfigCommon configuration;
TDD-UL-DL-ConfigDedicated configuration;
a combination of TDD-UL-DL-ConfigCommon and TDD-UL-DL-ConfigDedicated configurations; or
downlink control information (DCI) format 2-0 indication.

A symbol that simultaneously contains the DL subband and the UL subband in the frequency domain may be referred to as an SBFD symbol.

In some embodiments, when one time slot includes a plurality of symbols and at least one of the plurality of symbols is the SBFD symbol, the time slot may be referred to as an SBFD time slot. Refer to FIG. 1b, where time slot 0 is a DL time slot, time slots 1 to 3 are SBFD time slots, and time slot 4 is a UL time slot.

In some embodiments, when all symbols included in one time slot are SBFD symbols, the time slot may be referred to as an SBFD time slot.

In some embodiments, a GB may further exist between the DL subband and the UL subband to reduce interference between the DL signal in the DL subband and the UL signal in the UL subband via frequency domain isolation.

In some embodiments, a PUSCH coverage performance may be enhanced and latency may be reduced by means of PUSCH repetition type B. DCI indicates one or more symbols where nominal repetitions of a PUSCH repetition type B transmission are located. The PUSCH repetition type B transmission may be cross-slot, i.e., the PUSCH repetition type B is transmitted in a plurality of time slots. According to DCI indication or RRC configuration, it is determined whether a symbol in the one or more symbols where the PUSCH repetition type B transmission is located is an invalid symbol or a valid symbol. Among them, the invalid symbol cannot be used for UL transmission. The UE determines a symbol position for each actual PUSCH repetition transmission according to a position of the valid symbol.

In some embodiments, a plurality of repetition transmissions in the PUSCH repetition type B may be transmitted on both an SBFD symbol and a non-SBFD symbol, but when one repetition transmission may only be transmitted on the SBFD symbol or on the non-SBFD symbol. A division manner of the actual PUSCH repetition has the following problem: one actual PUSCH repetition may include both the SBFD symbol and the non-SBFD symbol.

In some embodiments, the following are determining manners for the nominal repetition and the actual repetition in the PUSCH repetition type B.

In some embodiments, a starting time slot, a starting symbol S, and a duration symbol length L of a first nominal repetition are determined according to the DCI.

In some embodiments, a number of nominal repetitions is determined according to numberOfRepetitions-r16 configured by RRC, and a symbol where each nominal repetition is located is further determined in combination with DCI indication.

In some embodiments, after the terminal determines the invalid symbol within a time domain resource of each nominal repetition according to certain criteria, the other symbols may be regarded as potential valid symbols. If a number of potential valid symbols in symbols where nominal repetition #1 is located is greater than 0, nominal repetition #1 includes one or more actual repetitions. If a number of all consecutive potential valid symbols of nominal repetition #1 within a time slot is greater than 0, one actual repetition may be formed. Unless the duration symbol length L of the nominal repetition is 1, one actual repetition containing 1 symbol is not transmitted, for example, the 6th actual PUSCH repetition is not transmitted.

Refer to FIG. 1c for a schematic diagram of the nominal repetition and the actual repetition. It should be noted that "nominal repetition", "nominal copy", and "nominal repetition transmission" in the disclosure are interchangeable, and "actual repetition", "actual copy", and "actual repetition transmission" in the disclosure are interchangeable.

In some embodiments, for PUSCH repetition type B with type 1 configured grant (type1 CG), after RRC configuration, the PUSCH repetition type B may be periodically transmitted on a configured time-frequency resource using configured transmission parameters after waiting for a certain activation time.

In some embodiments, for PUSCH repetition type B with type2 CG:
1. RRC configures partial parameters: a period, an open-loop power control, a waveform, a redundancy version, a number of repetitions, frequency hopping, a number of hybrid automatic repeat request (HARQ) processes, etc.;
2. DCI activates and configures parameters such as a time-domain resource, a frequency-domain resource, a demodulation reference signal (DMRS), and/or a modulation and coding scheme (MCS) (an activation time is determined);
3. The PUSCH repetition type B is periodically transmitted in combination with the RRC configuration and the time-frequency resource activated and configured by the DCI;
4. The terminal needs to send an information element in a MAC CE to confirm an activation or deactivation of the PUSCH repetition type B with type 2 CG (to avoid confusion caused by not transmitting PUSCH when there is no UL data).

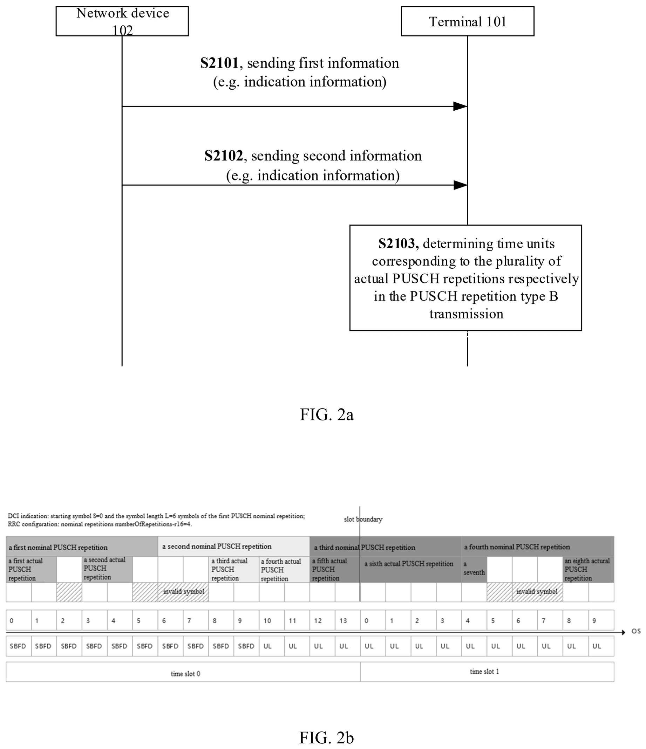

FIG. 2a is an interaction diagram of a method for indicating information according to an embodiment of the disclosure. As shown in FIG. 2a, the embodiment of the disclosure relates to a method for indicating information applied to the communication system 100, and the method includes the following steps.

At step S2101, a network device sends first information to a terminal.

In some embodiments, the terminal receives the first information sent by the network device.

In some embodiments, the first information may be indication information.

In some embodiments, the first information indicates at least one of:
one or more time unit categories corresponding to a plurality of actual PUSCH repetitions in a PUSCH repetition type B transmission; or
a time unit category corresponding to any one of the plurality of actual PUSCH repetitions.

In some embodiments, the time unit category includes at least one of: a first time unit category; or a second time unit category.

In some embodiments, a time unit may be a time unit, such as a symbol, a time slot, etc., but is not limited thereto.

In some embodiments, the first time unit category corresponds to an SBFD symbol, and the second time unit category corresponds to a non-SBFD symbol.

In some embodiments, the SBFD symbol is a symbol containing a DL subband and an UL subband in a frequency domain.

In some embodiments, the non-SBFD symbol is a symbol not containing the DL subband and the UL subband simultaneously in the frequency domain. In some embodiments, the SBFD symbol is a symbol containing the DL subband and the UL subband simultaneously in the frequency domain.

In some embodiments, the non-SBFD symbol is a symbol not containing the DL subband and the UL subband simultaneously in the frequency domain.

In some embodiments, the SBFD symbol includes a GB in the frequency domain.

In some embodiments, the first information indicates that: both the SBFD symbol and the non-SBFD symbol are available for performing the plurality of actual PUSCH repetitions, and either the SBFD symbol or the non-SBFD symbol is available for performing any one of the plurality of actual PUSCH repetitions.

In some embodiments, the first information is used to determine: when performing the PUSCH repetition type B transmission, the symbol category(ies) corresponding to the plurality of actual PUSCH repetitions and any one of the plurality of actual PUSCH repetitions.

In some embodiments, the terminal receives a first message sent by the network device, and the first message includes the first information.

In some embodiments, the first message may be one of: a DCI message, an RRC message, a MAC CE message, and an SIB1 message.

In some embodiments, the first information indicates that the plurality of actual PUSCH repetitions may be on both the SBFD symbol and the non-SBFD symbol, and any one of the plurality of actual PUSCH repetitions may only be on the SBFD symbol or on the non-SBFD symbol.

In some embodiments, before the network device sends the first information to the terminal, the network device sends third information to the terminal, where the third information is configured to instruct the terminal to receive data in a plurality of time units.

At step S2102, the network device sends second information to the terminal.

In some embodiments, the terminal receives the second information sent by the network device.

In some embodiments, the second information may be indication information.

In some embodiments, the second information is configured to instruct the terminal to perform the PUSCH repetition type B transmission.

In some embodiments, the second information is configured to trigger the terminal to perform the PUSCH repetition type B transmission.

In some embodiments, the terminal receives DCI sent by the network device, and the DCI includes the second information.

In some embodiments, the terminal receives an RRC message sent by the network device, and the RRC message includes the second information.

In some embodiments, a message is sent, and the message includes the first information and the second information. That is, the first information and the second information may be sent through the same message.

At step S2103, the terminal determines time units corresponding to the plurality of actual PUSCH repetitions respectively in the PUSCH repetition type B transmission.

In some embodiments, based on the first information, the terminal determines a time unit corresponding to each actual PUSCH repetition in the PUSCH repetition type B transmission.

In some embodiments, when the first information indicates the first time unit category, the time unit corresponding to each actual PUSCH repetition in the PUSCH repetition type B transmission may be a first time unit.

In some embodiments, when the first information indicates the second time unit category, the time unit corresponding to each actual PUSCH repetition in the PUSCH repetition type B transmission may be a second time unit.

In some embodiments, when the first information indicates both the first time unit category and the second time unit category, the time unit corresponding to the actual PUSCH repetition in the PUSCH repetition type B transmission may be the first time unit and/or the second time unit.

In some embodiments, a number of potential valid time units corresponding to a nominal PUSCH repetition in the PUSCH repetition type B transmission is greater than 0, and the nominal PUSCH repetition includes at least one actual PUSCH repetition. Here, "potential" may also be understood as "alternative" in certain scenarios.

In some embodiments, when a number of potential valid symbols in symbols where nominal repetition #1 is located is greater than 0, nominal repetition #1 includes one or more actual repetitions.

In some embodiments, the time unit is a symbol. The nominal PUSCH repetition corresponds to a plurality of potential valid symbols within one time slot. All consecutive SBFD symbols among the plurality of potential valid symbols form one actual PUSCH repetition, and/or all consecutive non-SBFD symbols among the plurality of potential valid symbols form one actual PUSCH repetition.

In some embodiments, among the symbols where nominal repetition #1 is located within one time slot, all consecutive potential valid symbols of category A form one actual repetition, and all consecutive potential valid symbols of category B form one actual repetition.

In some embodiments, all symbols in the potential valid symbols of category A are SBFD symbols.

In some embodiments, all symbols in the potential valid symbols of category B are non-SBFD symbols.

In some embodiments, symbol(s) where one actual repetition is located are all SBFD symbol(s) or all non-SBFD symbol(s).

For example, refer to FIG. 2b, where symbols 8-10 in time slot 0 are divided into 2 actual repetitions.

In some embodiments, the terminal determines the time unit category corresponding to each actual PUSCH repetition in the PUSCH repetition type B transmission.

In some embodiments, the terminal, according to the first information, determines the time unit category corresponding to each actual PUSCH repetition in the PUSCH repetition type B transmission.

In some embodiments, the term "information" may be interchangeable with terms such as "message", "signal", "signaling", "report", "configuration", "indication", "instruction", "command", "channel", "parameter", "field", "data", and the like.

In some embodiments, the term "send" may be interchangeable with terms such as "transmit", "report", "transmission", and the like.

The method for indicating information involved in the embodiments of the disclosure may include at least one of steps S2101 to S2103. For example, step S2101 may be implemented as an independent embodiment, step S2102 may be implemented as an independent embodiment, and step S2103 may be implemented as an independent embodiment. For example, step S2101 combined with step S2103 may be implemented as an independent embodiment, and step S2102 combined with step S2103 may be implemented as an independent embodiment, but it is not limited thereto.

In some embodiments, steps S2101, S2102, and S2103 are optional, and one or more of these steps may be omitted or replaced in different embodiments.

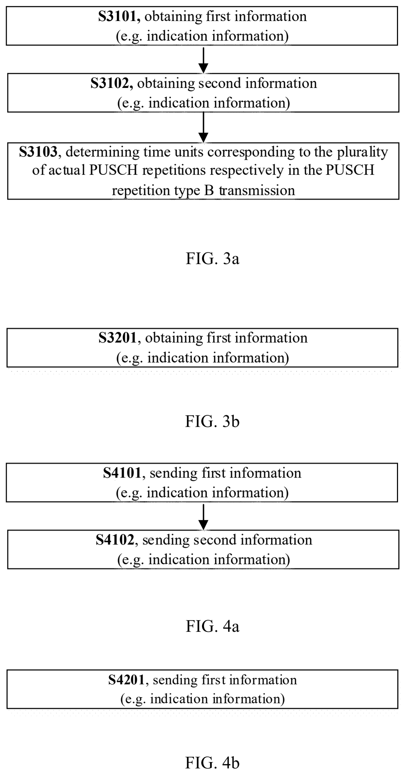

FIG. 3a is a schematic flowchart of a method for indicating information according to an embodiment of the disclosure. As shown in FIG. 3a, the method for indicating information involved in the embodiment of the disclosure is executed by the terminal 101, and the method includes the following steps.

At step S3101, first information is received.

In some embodiments, reference may be made to the optional implementations of step S2101 in FIG. 2a and other related parts in the embodiment involved in FIG. 2a for the optional implementations of step S3101, which are not repeated here.

In some embodiments, the terminal receives the first information sent by the access network device, but it is not limited thereto, and may also receive the first information sent by other subjects.

In some embodiments, the terminal obtains the first information specified by a protocol.

In some embodiments, the terminal obtains the first information from an upper layer(s).

In some embodiments, the terminal processes to obtain the first information.

In some embodiments, step S3101 is omitted, and the terminal independently implements the function indicated by the first information, or the above function is default or preconfigured.

At step S3102, second information is obtained.

In some embodiments, reference may be made to the optional implementations of step S2102 in FIG. 2a and other related parts in the embodiment involved in FIG. 2a for the optional implementations of step S3102, which are not repeated here.

In some embodiments, the terminal receives the second information sent by the access network device, but it is not limited thereto, and may also receive the second information sent by other subjects.

In some embodiments, the terminal obtains the second information specified by a protocol.

In some embodiments, the terminal obtains the second information from the upper layer(s).

In some embodiments, the terminal processes to obtain the second information.

In some embodiments, step S3102 is omitted, and the terminal independently implements the function indicated by the second information, or the above function is default or preconfigured.

At step S3103, time units corresponding to a plurality of actual PUSCH repetitions respectively in a PUSCH repetition Type B transmission.

In some embodiments, reference may be made to the optional implementations of step S2103 in FIG. 2a and other related parts in the embodiment involved in FIG. 2a for the optional implementations of step S3103, which are not repeated here.

The method for indicating information involved in the embodiment of the disclosure may include at least one of steps S3101 to S3103. For example, step S3101 may be implemented as an independent embodiment, step S3102 may be implemented as an independent embodiment, and step S3103 may be implemented as an independent embodiment. For example, step S3101 combined with step S3103 may be implemented as an independent embodiment, and step S3102 combined with step S3103 may be implemented as an independent embodiment, but it is not limited thereto.

In some embodiments, steps S3101, S3102, and S3103 are optional, and one or more of these steps may be omitted or replaced in different embodiments.

FIG. 3b is a schematic flowchart of a method for indicating information according to an embodiment of the disclosure. As shown in FIG. 3b, the method for indicating information involved in the embodiment of the disclosure is executed by the terminal 101, and the method includes the following steps.

At step S3201, first information is received.

In some embodiments, the first information indicates at least one of:
one or more time unit categories corresponding to a plurality of actual PUSCH repetitions in a PUSCH repetition type B transmission; or
a time unit category corresponding to any one of the plurality of actual PUSCH repetitions.

In some embodiments, reference may be made to the optional implementations of step S2101 in FIG. 2a and other related parts in the embodiment involved in FIG. 2a for the optional implementations of step S3201, which are not repeated here.

In some embodiments, the terminal receives the first information sent by the access network device, but it is not limited thereto, and may also receive the first information sent by other subjects.

In some embodiments, the terminal obtains the first information specified by a protocol.

In some embodiments, the terminal obtains the first information from an upper layer(s).

In some embodiments, the terminal processes to obtain the first information.

In some embodiments, step S3201 is omitted, and the terminal independently implements the function indicated by the first information, or the above function is default or preconfigured.

In some embodiments, the time unit category includes at least one of: a first time unit category, or a second time unit category. The first time unit category corresponds to an SBFD symbol, and the second time unit category corresponds to a non-SBFD symbol.

In some embodiments, the first information indicates that:

both an SBFD symbol and a non-SBFD symbol are available for performing the plurality of actual PUSCH repetitions, and either the SBFD symbol or the non-SBFD symbol is available for performing any one of the plurality of actual PUSCH repetitions.

In some embodiments, receiving the first information includes:
receiving a first message,
in which the first message includes the first information, and the first message is one of:
   a DCI message;
   a RRC message;
   a MAC CE message; and
   an SIB.

In some embodiments, the method further includes:
receiving second information,
in which the second information is configured to instruct a terminal to perform the PUSCH repetition type B transmission.

In some embodiments, receiving the second information includes:
receiving a second message,
in which the second message includes the second information, and the second message is one of:
   a DCI message; and
   a RRC message.

In some embodiments, the method further includes:
determining, based on the first information, time units corresponding to the plurality of actual PUSCH repetitions respectively in the PUSCH repetition type B transmission.

In some embodiments, a number of potential valid time units corresponding to a nominal PUSCH repetition in the PUSCH repetition type B transmission is greater than 0, and the nominal PUSCH repetition includes at least one actual PUSCH repetition.

In some embodiments, a time unit is a symbol, a nominal PUSCH repetition corresponds to a plurality of potential valid symbols within one time slot, and all consecutive SBFD symbols among the plurality of potential valid symbols form one actual PUSCH repetition, and/or all consecutive non-SBFD symbols among the plurality of potential valid symbols form one actual PUSCH repetition.

In some embodiments, the SBFD symbol is a symbol containing a DL subband and an UL subband in a frequency domain, and the non-SBFD symbol is a symbol not containing the DL subband and the UL subband simultaneously in the frequency domain.

In some embodiments, the SBFD symbol includes a GB in the frequency domain.

In some embodiments, the method further includes:
receiving third information;
in which the third information is configured to instruct a terminal to receive data in a plurality of time units.

FIG. 4a is a schematic flowchart of a method for indicating method according to an embodiment of the disclosure. As shown in FIG. 4a, the method for indicating method involved in the embodiment of the disclosure is executed by the network device 102, and the method includes the following steps.

At step S4101, first information is sent.

In some embodiments, reference may be made to the optional implementations of step S2201 in FIG. 2a and other related parts in the embodiment involved in FIG. 2a for the optional implementations of step S4101, which are not repeated here.

In some embodiments, the network device sends the first information to a terminal, but it is not limited thereto, and may also send the first information to other subjects.

At step S4102, second information is sent.

In some embodiments, reference may be made to the optional implementations of step S2102 in FIG. 2a and other related parts in the embodiment involved in FIG. 2a for the optional implementations of step S4102, which are not repeated here.

In some embodiments, the network device sends the second information to the terminal, but it is not limited thereto, and may also send the second information to other subjects.

The method for indicating method involved in the embodiment of the disclosure may include at least one of steps S4101 to S4102. For example, step S4101 may be implemented as an independent embodiment, and step S4102 may be implemented as an independent embodiment. For example, step S4101 combined with step S4102 may be implemented as an independent embodiment, but it is not limited thereto.

In some embodiments, steps S4101 and S4102 are optional, and one or more of these steps may be omitted or replaced in different embodiments.

FIG. 4b is a schematic flowchart of a method for indicating method according to an embodiment of the disclosure. As shown in FIG. 4b, the method for indicating method involved in the embodiment of the disclosure is executed by the network device, and the method includes the following steps.

At step S4201, first information is sent.

In some embodiments, the first information indicates at least one of:
one or more time unit categories corresponding to a plurality of actual PUSCH repetitions in a PUSCH repetition type B transmission; or
a time unit category corresponding to any one of the plurality of actual PUSCH repetitions.

In some embodiments, reference may be made to the optional implementations of step S2201 in FIG. 2a and other related parts in the embodiment involved in FIG. 2a for the optional implementations of step S4201, which are not repeated here.

In some embodiments, the network device sends the first information to a terminal, but it is not limited thereto, and may also send the first information to other subjects.

In some embodiments, the time unit category includes at least one of: a first time unit category, or a second time unit category, in which the first time unit category corresponds to an SBFD symbol, and the second time unit category corresponds to a non-SBFD symbol.

In some embodiments, the first information indicates that:

both an SBFD symbol and a non-SBFD symbol are available for performing the plurality of actual PUSCH repetitions, and either the SBFD symbol or the non-SBFD symbol is available for performing any one of the plurality of actual PUSCH repetitions.

In some embodiments, sending the first information includes:
sending a first message,
in which the first message includes the first information, and the first message is one of:
   a DCI message;
   a RRC message;
   a MAC CE message; and
   an SIB.

In some embodiments, the method further includes:
sending second information,
in which the second information is configured to instruct a terminal to perform the PUSCH repetition type B transmission.

In some embodiments, sending the second information includes:
sending a second message,
in which the second message includes the second information, and the second message is one of:
   a DCI message; and
   a RRC message.

In some embodiments, a number of potential valid time units corresponding to a nominal PUSCH repetition in the PUSCH repetition type B transmission is greater than 0, and the nominal PUSCH repetition includes at least one actual PUSCH repetition.

In some embodiments, a time unit is a symbol, a nominal PUSCH repetition corresponds to a plurality of potential valid symbols within one time slot, and all consecutive SBFD symbols among the plurality of potential valid symbols form one actual PUSCH repetition, and/or all consecutive non-SBFD symbols among the plurality of potential valid symbols form one actual PUSCH repetition.

In some embodiments, the non-SBFD symbol is a symbol not containing a DL subband and an UL subband simultaneously in a frequency domain.

In some embodiments, the SBFD symbol includes a GB in the frequency domain.

In some embodiments, the method further includes:
sending third information;
in which the third information is configured to instruct a terminal to receive data in a plurality of time units.

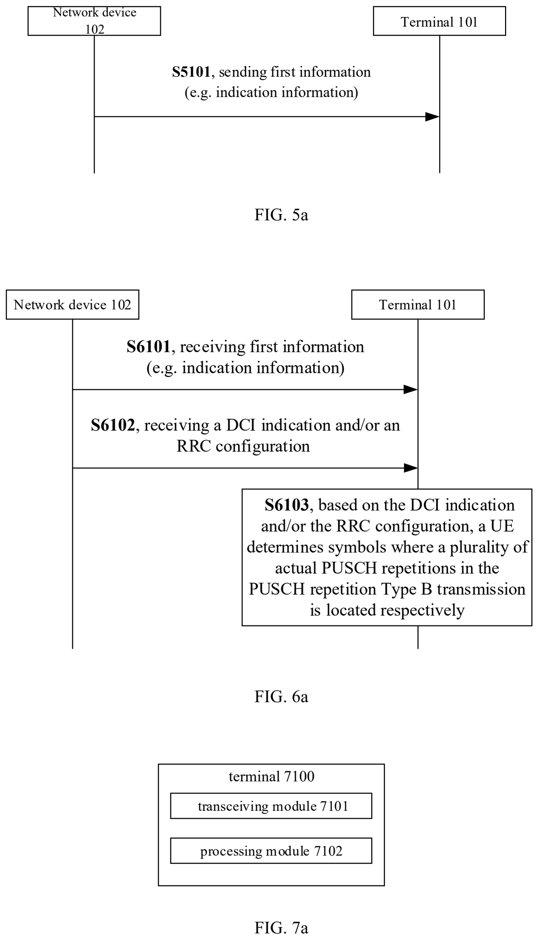

FIG. 5a is an interaction schematic diagram of a method for indicating information according to an embodiment of the disclosure. As shown in FIG. 5a, the method for indicating information involved in the embodiment of the disclosure is applied to the communication system 100, and the method includes the following steps.

At step S5101, a network device sends first information to a terminal.

In some embodiments, the first information indicates at least one of:
one or more time unit categories corresponding to a plurality of actual PUSCH repetitions in a PUSCH repetition type B transmission; or
a time unit category corresponding to any one of the plurality of actual PUSCH repetitions.

For the optional implementations of step S5101, reference may be made to step S2101 in FIG. 2a and other related parts in the embodiment involved in FIG. 2a, which are not repeated here.

In some embodiments, the aforementioned method may include the methods of the foregoing embodiments on the communication system side, terminal side, access network device side, core network device side, etc., which are not repeated here.

FIG. 6a is an interaction schematic diagram of a method for indicating information according to an embodiment of the disclosure. As shown in FIG. 6a, the method for indicating information involved in the embodiment of the disclosure includes the following steps.

At step S6101, first information is received, in which the first information is configured to determine, in a case where a DCI indication/a RRC configuration configures a PUSCH repetition Type B transmission, one or more symbol categories where a plurality of actual PUSCH repetitions and any one of the plurality of actual PUSCH repetitions are located.

In some embodiments, a plurality of actual repetitions may be configured or indicated to be located on both an SBFD symbol and a non-SBFD symbol via information such as DCI, RRC, MAC CE, or SIB1, and any one of the plurality of actual repetitions may only be located on either the SBFD symbol or on the non-SBFD symbol.

At step S6102, a DCI indication and/or an RRC configuration are received, in which the DCI indication and/or the RRC configuration indicates to transmit a PUSCH repetition Type B.

At step S6103, based on the DCI indication and/or the RRC configuration, a UE determines symbols where a plurality of actual PUSCH repetitions in the PUSCH repetition Type B transmission is located respectively.

In some embodiments, when a number of potential valid symbols in symbols where nominal repetition #1 is located is greater than 0, nominal repetition #1 includes one or more actual repetitions.

In some embodiments, among the symbols where nominal repetition #1 is located within one time slot, all consecutive potential valid symbols of category A form one actual repetition, and all consecutive potential valid symbols of category B form one actual repetition.

In some embodiments, all symbols in the potential valid symbols of category A are SBFD symbols.

In some embodiments, all symbols in the potential valid symbols of category B are non-SBFD symbols.

In some embodiments, all symbols where one actual repetition is located are either SBFD symbols or non-SBFD symbols.

In the embodiments of the disclosure, some or all of the steps and their optional implementations may be arbitrarily combined with some or all of the steps in other embodiments, and may also be arbitrarily combined with the optional implementations of other embodiments.

The embodiments of the disclosure further provide an apparatus for implementing any of the foregoing methods. For example, an embodiment of the disclosure provides an apparatus including units or modules configured to implement each step executed by the terminal in any of the foregoing methods. For another example, another apparatus is provided, including units or modules configured to implement each step executed by a network device (e.g., an access network device, a core network function node, a core network device, etc.) in any of the foregoing methods.

It should be understood that the division of units or modules in the foregoing communication device is merely a logical functional division. In actual implementation, they may be fully or partially integrated into a single physical entity, or physically separated. In addition, the units or modules in the communication device may be implemented in the form of a processor invoking software: for example, the device includes a processor connected to a memory in which instructions are stored, and the processor invokes the instructions stored in the memory to implement any of the foregoing methods or the functions of the units or modules of the foregoing device. The processor is, for example, a general-purpose processor such as a Central Processing Unit (CPU) or a microprocessor, and the memory is a memory inside the device or a memory outside the device. Alternatively, the units or modules in the device may be implemented in the form of hardware circuits, and the functions of some or all units or modules may be implemented through the design of hardware circuits. The foregoing hardware circuits may be understood as one or more processors; for example, in one implementation, the foregoing hardware circuits are Application-Specific Integrated Circuits (ASICs), and the functions of some or all of the foregoing units or modules are implemented through the design of the logical relationships of components in the circuits; for another example, in another implementation, the foregoing hardware circuits may be implemented through Programmable Logic Devices (PLDs). Taking a Field Programmable Gate Array (FPGA) as an example, it may include a large number of logic gate circuits, and the connection relationships between the logic gate circuits are configured through configuration files to implement the functions of some or all of the foregoing units or modules. All units or modules of the foregoing device may be fully implemented in the form of a processor invoking software, or fully implemented in the form of hardware circuits, or partially implemented in the form of a processor invoking software and the remaining part implemented in the form of hardware circuits.

In the embodiments of the disclosure, a processor is a circuit with signal processing capabilities. In one implementation, the processor may be a circuit with instruction reading and execution capabilities, such as a Central Processing Unit (CPU), a microprocessor, a Graphics Processing Unit (GPU) (which may be understood as a type of microprocessor), or a Digital Signal Processor (DSP); in another implementation, the processor may implement certain functions through the logical relationship of hardware circuits, and the logical relationship of the foregoing hardware circuits is fixed or reconfigurable. For example, the processor is a hardware circuit implemented by an Application-Specific Integrated Circuit (ASIC) or a Programmable Logic Device (PLD), such as an FPGA. In a reconfigurable hardware circuit, the process in which the processor loads a configuration file to implement hardware circuit configuration may be understood as the process in which the processor loads instructions to implement the functions of some or all of the foregoing units or modules. In addition, it may also be a hardware circuit designed for artificial intelligence, which may be understood as an ASIC, such as a Neural Network Processing Unit (NPU), a Tensor Processing Unit (TPU), or a Deep Learning Processing Unit (DPU).

FIG. 7a is a schematic diagram of a terminal according to an embodiment of the disclosure. As shown in FIG. 7a, a terminal 7100 may include at least one of a transceiving module 7101, a processing module 7102, and the like. In some embodiments, the aforementioned transceiving module is configured to receive first information. In some embodiments, the aforementioned transceiving module is configured to perform at least one of the communication steps such as sending and/or receiving executed by the terminal 101 in any of the above methods (for example, step S2101, step S2102, but not limited thereto), which are not repeated here. In some embodiments, the aforementioned processing module is configured to perform at least one of the other steps executed by the terminal 101 in any of the above methods (for example, step S2103, but not limited thereto), which are not repeated here.

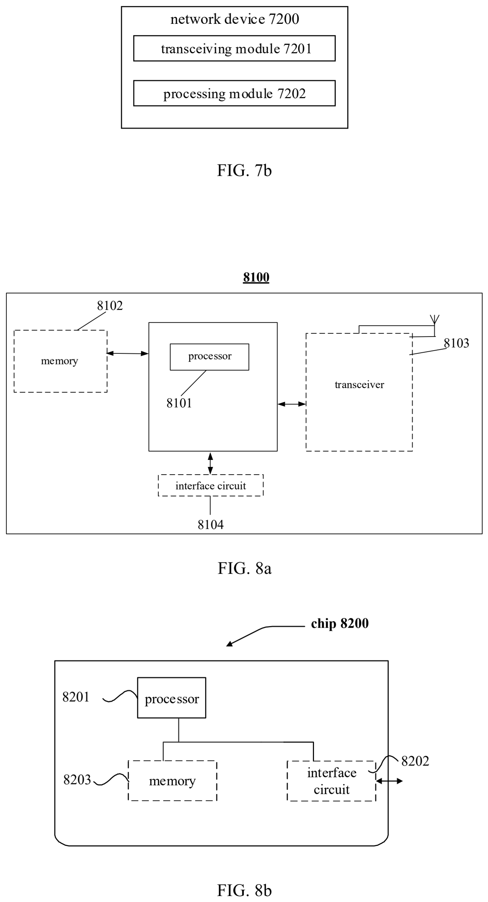

FIG. 7b is a schematic structural diagram of a network device proposed by an embodiment of the disclosure. As shown in FIG. 7b, a network device 7200 may include at least one of a transceiving module 7201, a processing module 7202, and the like. In some embodiments, the aforementioned transceiving module is configured to send first information. In some embodiments, the aforementioned transceiving module is configured to perform at least one of the communication steps such as sending and/or receiving executed by the terminal 101 in any of the above methods (for example, step S2101, step S3102, but not limited thereto), which are not repeated here. In some embodiments, the transceiving module may include a transmitting module and/or a receiving module, and the transmitting module and the receiving module may be separate or integrated together. In some embodiments, the transceiving module may be interchangeable with a transceiver.

In some embodiments, the processing module may be a single module, or may include a plurality of sub-modules. In some embodiments, the aforementioned plurality of sub-modules respectively execute all or part of the steps required to be performed by the processing module. In some embodiments, the processing module may be interchangeable with a processor.

FIG. 8a is a schematic structural diagram of a communication device 8100 proposed by an embodiment of the disclosure. The communication device 8100 may be a network device (such as an access network device, a core network device, and the like), a terminal (such as a user equipment (UE), and the like), a chip, a chip system, or a processor that supports the network device in implementing any of the above methods, or a chip, a chip system, or a processor that supports the terminal in implementing any of the above methods. The communication device 8100 is configured to implement the methods described in the foregoing method embodiments, and for details, refer to the descriptions in the above method embodiments.

As shown in FIG. 8a, the communication device 8100 includes one or more processors 8101. The processor 8101 may be a general-purpose processor, a special-purpose processor, or the like, for example, a baseband processor or a central processing unit (CPU). The baseband processor may be configured to process communication protocols and communication data, and the CPU may be configured to control the communication device (e.g., a base station, a baseband chip, a terminal device, a terminal device chip, a DU, or a CU), execute programs, and process program data. The communication device 8100 is configured to implement any of the above methods.

In some embodiments, the communication device 8100 further includes one or more memories 8102 for storing instructions. In some embodiments, all or part of the memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above methods (e.g., step S2101, step S2102, but not limited thereto), and the processor 8101 performs at least one of the other steps (e.g., step S2103, but not limited thereto).

In some embodiments, the transceiver may include a receiver and/or a transmitter, and the receiver and the transmitter may be separate or integrated together. In some embodiments, terms such as transceiver, transceiving unit, transceiving machine, and transceiving circuit may be interchangeable with each other; terms such as transmitter, transmitting unit, transmitting machine, and transmitting circuit may be interchangeable with each other; terms such as receiver, receiving unit, receiving machine, and receiving circuit may be interchangeable with each other.

In some embodiments, the communication device 8100 may include one or more interface circuits 8104. In some embodiments, the interface circuit 8104 is connected to the memory 8102, and the interface circuit 8104 may be configured to receive signals from the memory 8102 or other devices, and send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the disclosure is not limited thereto, and the structure of the communication device 8100 may not be limited by FIG. 8a. The communication device may be an independent device or a part of a larger device. For example, the communication device may be: (1) an independent integrated circuit (IC), a chip, a chip system, or a subsystem; (2) a set of one or more ICs, in some embodiments, the above IC set may also include a storage component for storing data and programs; (3) an Application-Specific Integrated Circuit (ASIC), such as a modem; (4) a module embedded in other devices; (5) a receiver, a terminal device, an intelligent terminal device, a cellular phone, a wireless device, a handheld device, a mobile unit, a vehicle-mounted device, a network device, a cloud device, an artificial intelligence device, and the like; (6) others.

FIG. 8b is a schematic structural diagram of a chip 8200 proposed by an embodiment of the disclosure. When the communication device 8100 is a chip or a chip system, reference may be made to the schematic structural diagram of the chip 8200 shown in FIG. 8b, but it is not limited thereto.

The chip 8200 includes one or more processors 8201, and the chip 8200 is configured to implement any of the above methods.

In some embodiments, the chip 8200 further includes one or more interface circuits 8202. In some embodiments, the interface circuit 8202 is connected to the memory 8203, and the interface circuit 8202 may be configured to receive signals from the memory 8203 or other devices, and send signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving in the above methods (e.g., step S2101, step S2102, but not limited thereto), and the processor 8201 performs at least one of the other steps (e.g., step S2103, but not limited thereto).

In some embodiments, terms such as interface circuit, interface, transceiving pin, and transceiver may be interchangeable with each other.

In some embodiments, the chip 8200 further includes one or more memories 8203 for storing instructions. In some embodiments, all or part of the memories 8203 may be located outside the chip 8200.

The disclosure further proposes a storage medium. Instructions are stored on the storage medium. When the instructions run on the communication device 8100, the communication device 8100 is caused to implement any of the above methods. In some embodiments, the storage medium is an electronic storage medium. In some embodiments, the storage medium is a computer-readable storage medium, but it is not limited thereto, and may also be a storage medium readable by other devices. In some embodiments, the storage medium is a non-transitory storage medium, but it is not limited thereto, and may also be a transitory storage medium.

The disclosure further proposes a program product. When the program product is executed by the communication device 8100, the communication device 8100 is caused to implement any of the above methods. In some embodiments, the program product is a computer program product.

The disclosure further proposes a computer program. When the computer program runs on a computer, the computer is caused to implement any of the above methods.

## Claims

1. A method for indicating information, comprising:
receiving first information;
wherein the first information indicates at least one of:
one or more time unit categories corresponding to a plurality of actual physical uplink shared channel (PUSCH) repetitions in a PUSCH repetition type B transmission; or
a time unit category corresponding to any one of the plurality of actual PUSCH repetitions.

2. The method according to claim 1, wherein the time unit category comprises at least one of: a first time unit category, or a second time unit category, wherein the first time unit category corresponds to a subband full duplex (SBFD) symbol, and the second time unit category corresponds to a non-SBFD symbol.

3. The method according to any one of claims 1-2, wherein the first information indicates that:
both an SBFD symbol and a non-SBFD symbol are available for performing the plurality of actual PUSCH repetitions, and either the SBFD symbol or the non-SBFD symbol is available for performing any one of the plurality of actual PUSCH repetitions.

4. The method according to any one of claims 1-3, wherein receiving the first information comprises:
receiving a first message,
wherein the first message comprises the first information, and the first message is one of:
a downlink control information (DCI) message;
a radio resource control (RRC) message;
a medium access control (MAC) control element (CE) message; and
a system information block (SIB).

5. The method according to any one of claims 1-4, further comprising:
receiving second information,
wherein the second information is configured to instruct a terminal to perform the PUSCH repetition type B transmission.

6. The method according to any one of claims 1-5, wherein receiving the second information comprises:
receiving a second message,
wherein the second message comprises the second information, and the second message is one of:
a DCI message; and
a RRC message.

7. The method according to any one of claims 1-6, further comprising:
determining, based on the first information, time units corresponding to the plurality of actual PUSCH repetitions respectively in the PUSCH repetition type B transmission.

8. The method according to any one of claims 1-7, wherein a number of potential valid time units corresponding to a nominal PUSCH repetition in the PUSCH repetition type B transmission is greater than 0, and the nominal PUSCH repetition comprises at least one actual PUSCH repetition.

9. The method according to any one of claims 1-8, wherein a time unit is a symbol, a nominal PUSCH repetition corresponds to a plurality of potential valid symbols within one time slot, and all consecutive SBFD symbols among the plurality of potential valid symbols form one actual PUSCH repetition, and/or all consecutive non-SBFD symbols among the plurality of potential valid symbols form one actual PUSCH repetition.

10. The method according to any one of claims 2-9, wherein the SBFD symbol is a symbol containing a downlink (DL) subband and an uplink (UL) subband in a frequency domain, and the non-SBFD symbol is a symbol not containing the DL subband and the UL subband simultaneously in the frequency domain.

11. The method according to claim 10, wherein the SBFD symbol comprises a guard band (GB) in the frequency domain.

12. The method according to any one of claims 1-11, further comprising:
receiving third information;
wherein the third information is configured to instruct a terminal to receive data in a plurality of time units.

13. A method for indicating information, comprising:
sending first information;
wherein the first information indicates at least one of:
one or more time unit categories corresponding to a plurality of actual physical uplink shared channel (PUSCH) repetitions in a PUSCH repetition type B transmission; or
a time unit category corresponding to any one of the plurality of actual PUSCH repetitions.

14. The method according to claim 13, wherein the time unit category comprises at least one of: a first time unit category, or a second time unit category, wherein the first time unit category corresponds to a subband full duplex (SBFD) symbol, and the second time unit category corresponds to a non-SBFD symbol.

15. The method according to any one of claims 13-14, wherein the first information indicates that:
both an SBFD symbol and a non-SBFD symbol are available for performing the plurality of actual PUSCH repetitions, and either the SBFD symbol or the non-SBFD symbol is available for performing any one of the plurality of actual PUSCH repetitions.

16. The method according to any one of claims 13-15, wherein sending the first information comprises:
sending a first message,
wherein the first message comprises the first information, and the first message is one of:
a downlink control information (DCI) message;
a radio resource control (RRC) message;
a medium access control (MAC) control element (CE) message; and
a system information block (SIB).

17. The method according to any one of claims 13-16, further comprising:
sending second information,
wherein the second information is configured to instruct a terminal to perform the PUSCH repetition type B transmission.

18. The method according to any one of claims 13-17, wherein sending the second information comprises:
sending a second message,
wherein the second message comprises the second information, and the second message is one of:
a DCI message; and
a RRC message.

19. The method according to any one of claims 13-18, wherein a number of potential valid time units corresponding to a nominal PUSCH repetition in the PUSCH repetition type B transmission is greater than 0, and the nominal PUSCH repetition comprises at least one actual PUSCH repetition.

20. The method according to any one of claims 13-19, wherein a time unit is a symbol, a nominal PUSCH repetition corresponds to a plurality of potential valid symbols within one time slot, and all consecutive SBFD symbols among the plurality of potential valid symbols form one actual PUSCH repetition, and/or all consecutive non-SBFD symbols among the plurality of potential valid symbols form one actual PUSCH repetition.

21. The method according to any one of claims 13-20, wherein the non-SBFD symbol is a symbol not containing a downlink (DL) subband and an uplink (UL) subband simultaneously in a frequency domain.

22. The method according to claim 21, wherein the SBFD symbol comprises a guard band (GB) in the frequency domain.

23. The method according to any one of claims 13-22, further comprising:
sending third information;
wherein the third information is configured to instruct a terminal to receive data in a plurality of time units.

24. A terminal, comprising:
a transceiving module configured to receive first information;
wherein the first information indicates at least one of:
one or more time unit categories corresponding to a plurality of actual physical uplink shared channel (PUSCH) repetitions in PUSCH repetition type B transmission; or
a time unit category corresponding to any one of the plurality of actual PUSCH repetitions.

25. A network device, comprising:
a transceiving module configured to send first information;
wherein the first information indicates at least one of:
one or more time unit categories corresponding to a plurality of actual physical uplink shared channel (PUSCH) repetitions in PUSCH repetition type B transmission; or
a time unit category corresponding to any one of the plurality of actual PUSCH repetitions.

26. A method for indicating information, comprising:
a network device sending first information to a terminal;
wherein the first information indicates at least one of:
one or more time unit categories corresponding to a plurality of actual physical uplink shared channel (PUSCH) repetitions in PUSCH repetition type B transmission; or
a time unit category corresponding to any one of the plurality of actual PUSCH repetitions.

27. A communication system, comprising a terminal and a network device, wherein the terminal is configured to implement the method for indicating information according to any one of claims 1 to 12, and the network device is configured to implement the method for indicating information according to any one of claims 13 to 23.

28. A terminal, comprising:
one or more processors;
wherein the terminal is configured to execute the method for indicating information according to any one of claims 1 to 12.

29. A network device, comprising:
one or more processors;
wherein the network device is configured to execute the method for indicating information according to any one of claims 13 to 23.

30. A storage medium storing instructions which, when run on a communication device, cause the communication device to execute the method for indicating information according to any one of claims 1 to 12 or any one of claims 13 to 23.
